# EUROPEAN PATENT APPLICATION

(11) **EP 3 412 987 A1**
(43) Date of publication of application: **12.12.2018**
(21) Application number: 17747032.5
(22) Date of filing: 13.03.2017
(51) Int. Cl.: F24H 1/10, F24H 9/00

(54) **SEALED BODY FOR WATER PASSAGE HEATING APPARATUS**

(30) Priority: 05.02.2016 CN 201610081518
(71) Applicant: Foshan Viomi Electrical Technology Co., Ltd., Foshan, Guangdong 528300 (CN); Chen, Xiaoping, Foshan, Guangdong 528300 (CN)
(72) Inventor: CHEN, Xiaoping, Foshan Guangdong 528300 (CN)
(74) Representative: Lang, Christian
(86) International application number: PCT/CN2017/076447
(87) International publication number: WO 2017/133712

(57) **Abstract**

A sealed body (2) for a water passage heating apparatus (100) is disclosed. The water passage heating apparatus (100) comprises a heating body (10) and a sealed body (2). The heating body (10) comprises a heat transfer component (3) and a heating component (4). The heat transfer component (3) is tubular, and the heating component (4) is provided on the periphery of the heat transfer component (3). The inner circumference of the heat transfer component (3) is a smooth surface. A sealing rib (21) of an upward spiral structure is provided on the surface of the sealed body (2), and the sealing rib (21) is sealedly connected to the inner circumference of the heat transfer component (3). The sealing rib (21), the sealed body (2), and the inner circumference of the heat transfer component (3) enclose and form a spiral sealed water passage (8), and the two ends of the sealed water passage (8) are provided respectively with a water inlet (14) and a water outlet (11) connected to the exterior.

## Description

### BACKGROUND OF THE INVENTION

### Field of the Invention

The present invention relates to a liquid heating apparatus, particularly to a sealed body for a water passage heating apparatus.

### Description of the Related Art

In an ordinary electric heating device, a heating resistor is encapsulated with an insulator and then embedded in cast aluminum having higher thermal conductivity, and a stainless tube is curved to form a continuous liquid passageway and embedded in the cast aluminum.

Heat generated by the heating resistor cannot directly enter the liquid inside the stainless tube but heats the cast aluminum to a given temperature beforehand. Then, heat exchange undertakes between the cast aluminum and the liquid through the stainless tube. Because aluminum has a higher thermal inertia, the following problems may take place: 1. A longer period of time (about 15-305 seconds) is spent in preheating the cast aluminum to the required temperature while starting up the device. 2. If the rate that the heating resistor generates heat is lower than the rate that the liquid absorbs heat in the case requiring continuous liquid supply, the temperature of the cast aluminum is decreased; if the temperature of the output liquid is not allowed to be lowered, more time would be spent in preheating. 3. If the heating device is demanded to be in a standby state, some energy would be spent in keeping the temperature at a constant temperature. 4. The heating device using cast aluminum with high thermal inertia needs preheating to supply liquid of a constant temperature; if the heating device is required to supply liquid continuously, the temperature of the output liquid is hard to keep constant; further, because of high thermal inertia of cast aluminum, it is unlikely to realize continuous variation of liquid temperature; besides, cast aluminum is heavy and bulky, and the fabrication technology is very complicated.

There are some existing schemes for solving the abovementioned problems. For example, a plastic runner is arranged inside a thick-film stainless tube to avoid the influence of thermal inertia. Plastic material has a given hardness. In order to let the plastic runner be thrusted into the stainless outer tube, the outer diameter of the plastic runner must be reduced and is not fully fit to the inner diameter of the stainless outer tube. Although the scheme solves the problem of installation, it brings about the problem of sealing. The liquid would not always flow along the runner but may partially run through the gaps where sealing is incomplete. A portion of water running into the gaps may become stagnant water, and the stagnant water would be persistently heated in situ and finally vaporized to jet out. Thus, the output water become intermittent. Because the sealing between the plastic and metal can only be realized by sealing rings, it is unlikely to achieve the requirement of keeping a pressure of 8-10 Bar. Even at ambient pressure, the sealing rings, which are deteriorated by long-term usage at high temperature, may lead to liquid leakage.

At present, the traditional water purification machine normally has only a filtration section and a temperature modification section. In usage, water is filtered, next chilled or heated, and then supplied to users. However, the traditional water purification machine still has the following problems: the input water has different temperatures in different environments, and thus the output water also has different temperatures; for example, even though water is heated/chilled for an identical period of time, the output water has different temperatures in winter and summer because the input water has different temperatures in winter and summer. Therefore, some water purification machines have a function of adjusting the time of heating or chilling water to solve the problems of different input water temperatures. Although the measure can satisfy the users in the output water temperature, it also brings about some inconveniences. For example, it cannot meet the demand by some hi-end users for the speed of supplying water. Therefore, how to guarantee the temperature of output water without varying the time of heating or chilling water has become a problem the manufacturers desire to overcome.

### SUMMARY OF THE INVENTION

The primary objective of the present invention is to overcome the deficiencies of the existing technologies and provide a sealed body for a water passage heating apparatus, which is characterized in having a simple and rational structure and abilities to limit the direction and path of water flow and increase the heat exchange rate.

In order to achieve the objectives of the present invention, the present invention proposes a sealed body for a water passage heating apparatus. The water passage heating apparatus comprises a heating body and a sealed body. The heating body includes a heat transfer component and a heating component. The heat transfer component is in form of a pipe structure. The heating component is disposed on the outer surface of the heat transfer component. The inner surface of the heat transfer component is a smooth surface. The sealed body is characterized in that the surface of the sealed body has a sealing rib rising spirally upward. The sealing rib contacts the inner surface of the heat transfer component in a sealed state. The sealing rib, the sealed body, and the inner surface of the heat transfer component jointly enclose a room to form a sealed water passage in a spiral form. A water outlet and a water inlet are respectively disposed at two ends of the sealed water passage. The sealed water passage interconnects with the exterior through the water outlet and the water inlet. The liquid flowing into the sealed water passage via the water inlet can only run along the entire sealed water passage before it runs out of the water outlet. Thus, the flowing path is longer, and the liquid can fully contact the heating body. Hence, less energy is wasted.

The objectives of the present invention may be further realized by the technical measures involved in the embodiments described below.

In one embodiment, a silicon material or a rubber material is molded on the outer surface of a sealed frame in a two-shot injection molding technology to form the sealed body. The sealed frame is connected with the heat transfer component. The sealed body is enclosed by and tightly pressed against the heat transfer component and the sealed frame. Thereby is increased the security of the connection between the sealed body and the sealed frame.

In one embodiment, the sealed frame is in form of a pipe structure. The sealed frame has a hollow chamber thereinside, and the hollow chamber has two open ends. Each of the water inlet and the water outlet extends toward the interior of the hollow chamber. Thereby is increased the space efficiency and decreased the weight of the sealed frame. Further is decreased the thermal inertia and increased the thermal efficiency. Furthermore is decreased the cost.

In one embodiment, the outer surface of the sealed frame has positioning elements for positioning the sealed body. Thereby, the sealed body is fixed to the sealed frame relatively securely. Thus, the sealed water passage would not move, or the movement thereof may be neglected.

In one embodiment, the positioning elements are more than two bumps or protrudent ribs.

In one embodiment, each of the sealed frame and the heating body is a metallic pipe structure. The sealed frame has two everted edges on two rims thereof. The everted edges and two rims of the heat transfer component are welded in a sealed way. The everted edges make the sealed frame separated from the heat transfer component by a given distance. Thereby, the sealed body can be disposed inside the space between the sealed frame and the heat transfer component.

In one embodiment, the sealing rib and the sealed body are fabricated into a one-piece component. The area where the sealing rib contacts the sealed body is larger than the area where the sealing rib contacts the heating body in a sealed state. Thereby, more heat is transferred to the heated liquid, and less energy is wasted.

In one embodiment, one edge of the sealing rib, which contacts the heat transfer component in a sealed state, has a shape of a sharp angle. Thereby, the sealing rib is easier to fit to the heat transfer component. Further, the contact area is decreased.

In one embodiment, the heating component is a thick-film heating circuit, and the thick-film heating circuit is sintered onto the outer surface of the heat transfer component.

In one embodiment, the position of the thick-film heating circuit is between the altitudes corresponding to the water inlet and the water outlet, and a surface area of the sealed water passage is larger than a surface area of the thick-film heating circuit, whereby to guarantee that only the sealed water passage is heated by the thick-film heating circuit and prevent from temperature rising too fast, which is caused by that the thick-film heating circuit cannot undertake heat exchange with the heated liquid timely. Thus is prolonged the service life of the thick-film heating circuit and enhanced the safety of using the product.

The present invention has the following advantages:
(1) The liquid flowing into the sealed water passage via the water inlet can only run along the entire sealed water passage before it runs out of the water outlet. Thus, the flowing path is longer, and the liquid can fully contact the heating body. Hence, less energy is wasted.
(2) The heating apparatus is exempted from the gaps between the liquid runner and the stainless thick-film heater, which may cause liquid vaporization, generate steam, and induce intermittent water supply.

### BRIEF DESCRIPTION OF THE DRAWINGS

Fig.1 is an exploded view schematically showing the structure of a water passage heating apparatus according to one embodiment of the present invention;
Fig.2 is a diagram schematically showing the structure of an assemblage of a water passage heating apparatus according to one embodiment of the present invention;
Fig.3 is a diagram schematically showing the structure of the water passage heating apparatus in Fig.2, which is viewed from another viewing angle;
Fig.4 is a sectional view schematically showing the structure of a water passage heating apparatus according to one embodiment of the present invention;
Fig.5 is an enlarged view schematically showing the structure of a water passage heating apparatus in the area labelled by A according to one embodiment of the present invention;
Fig.6 is a diagram schematically showing the structure of a sealed frame of a water passage heating apparatus according to another embodiment of the present invention;
Fig.7 is a diagram schematically showing the operation of a water passage heating apparatus according to one embodiment of the present invention; and
Fig.8 is a block diagram schematically showing the operation of a water passage heating apparatus in Fig.7 according to one embodiment of the present invention.

### DETAILED DESCRIPTION OF THE INVENTION

Below, embodiments are described in detail in cooperation with the attached drawings to further demonstrate the present invention.

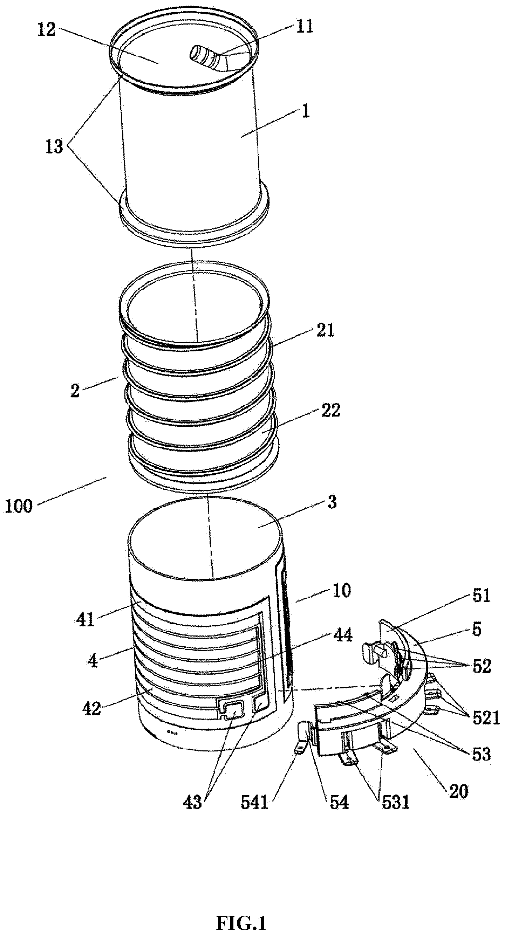

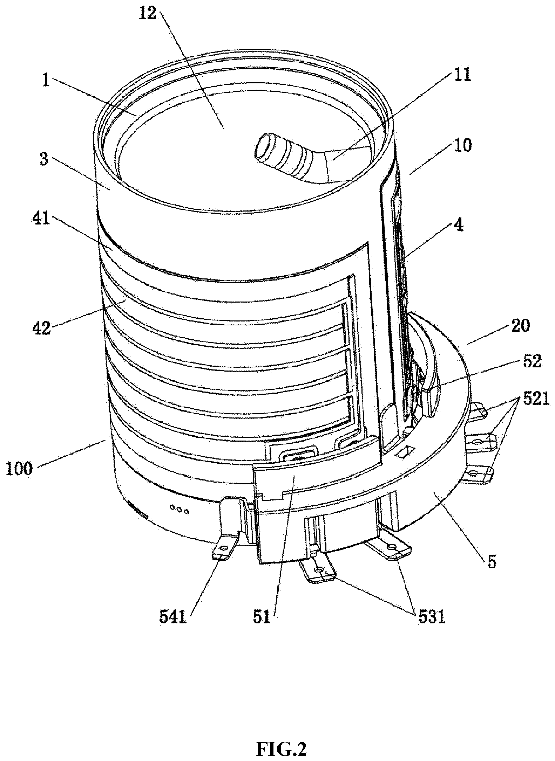

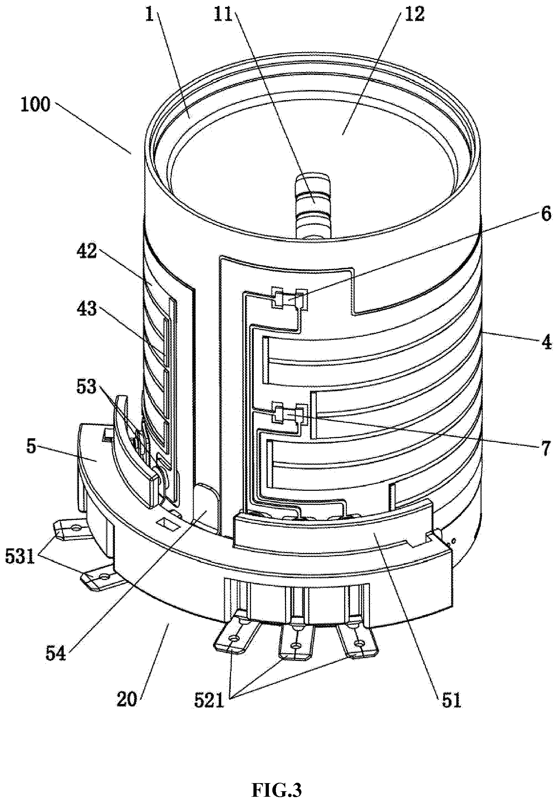

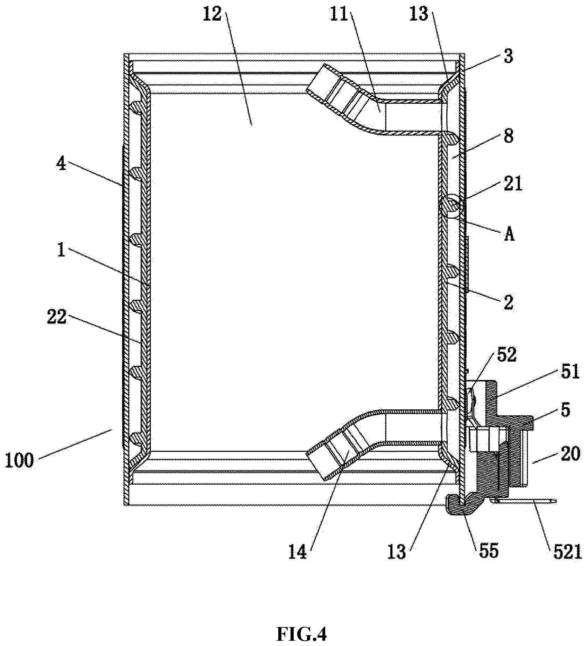

Refer to Figs. 1-5 for the basic schemes of the present invention. The present invention discloses a sealed body for a water passage heating apparatus. The water passage heating apparatus comprises a heating body 10 and a sealed body 2. The heating body 10 includes a heat transfer component 3 and a heating component 4. The heat transfer component 3 is in form of a pipe structure. The heating component 4 is disposed on the outer surface of the heat transfer component 3. The inner surface of the heat transfer component 3 is a smooth surface. A sealing rib 21 rises spirally upward along the surface of the sealed body 2. The sealing rib 21 contacts the inner surface of the heat transfer component 3 in a sealed state. The sealing rib 21, the sealed body 2, and the inner surface of the heat transfer component 3 jointly enclose a room to form a sealed water passage 8 in a spiral form. A water outlet 14 and a water inlet 11 are respectively disposed at two ends of the sealed water passage 8. The sealed water passage 8 interconnects with the exterior through the water outlet 14 and the water inlet 11.

In one embodiment, the water passage heating apparatus (i.e. the heating apparatus 100) comprises a sealed frame 1, a heating body 10, a water inlet 14 and a water outlet 11. The sealed frame 1 and the heating body 10 are sealedly connected with each other, and the sealed frame 1 and the heating body 10 enclose a room to form a cavity therebetween. A sealed body 2 is disposed inside the cavity. The sealed body 2 and the heating body 10 enclose a room to form a sealed water passage 8 having a given capacity. The sealed water passage 8 interconnects with the exterior through the water inlet 14 and the water outlet 11. The water from the water inlet 14 is constrained by the sealed water passage 8, flows along the sealed water passage 8, and then runs out of the water outlet 11.

The sealed body 2 has a sealing rib 21 along a path interconnecting the water inlet 14 and the water outlet 11. The sealing rib 21 contacts the heating body 10 in a sealed state. In one embodiment, the sealing rib 21 and the sealed body 2 are fabricated into a one-piece component. The area where the sealing rib 21 contacts the sealed body 2 is larger than the area where the sealing rib 21 contacts the heating body 10 in a sealed state. One edge of the sealing rib 21, which contacts the heat transfer component 3 in a sealed state, has a shape of a sharp angle.

A silicone or a rubber is cast outside the sealed frame 1 to form the sealed body 2.

Each of the sealed frame 1 and the heating body 10 is in form of a hollow pipe structure. The sealed body 2 tightly sleeves the outer surface of the sealed frame 1. The sealing rib 21 rises upward spirally along the outer surface of the sealed body 2. The pitch of the sealing rib 21 forms a spiral water trench 22. The heating body 10 sleeves the sealed frame 1 and the sealed body 2. Two ends of the heating body 10 are respectively fit to two ends of the sealed frame 1 in a sealed state. The spiral water trench 22 and the heating body 10 jointly enclose a room to form the sealed water passage 8 in a spiral form. The water inlet 14 and the water outlet 11 are respectively at two ends of the sealed water passage 8.

The sealed frame 1 has a hollow chamber 12 in the center thereof. The water inlet 14 and the water outlet 11 are disposed on the wall of the hollow chamber 12. The sealed frame 1 has two everted edges 13 on two rims thereof. The everted edges 13 and two rims of the heat transfer component 3 are welded in a sealed way. Each of the water inlet 14 and the water outlet 11 is welded to the sealed frame 1 in a sealed way. Each of the water inlet 14 and the water outlet 11 interconnects with the sealed water passage 8. The sealed frame 1 is in form of a pipe structure, having the hollow chamber 12 thereinside. The hollow chamber 12 has two open ends. The water inlet 14 and the water outlet 11 are disposed on the wall of the hollow chamber 12, respectively curved upward and downward.

One surface of the heating body 10, which faces the sealed body 2, is a smooth surface.

The heating body 10 includes a heat transfer component 3 and a heating component 4. The heat transfer component 3 is in form of a pipe structure. The heating component 4 is a thick-film heating circuit. The thick-film heating circuit is sintered onto the outer surface of the heat transfer component 3. The position of the thick-film heating circuit is between the altitudes corresponding to the water inlet 14 and the water outlet 11. The surface area of the sealed water passage 8 is larger than the surface area of the thick-film heating circuit.

The thick-film heating circuit include bottom insulation layers 41, heating resistor layers 42 and outer insulation layers, which are sintered onto the outer surface of the heat transfer component 3 in sequence. The bottom insulation layer 41 has power-supply terminals 43, which will electrically contact the heating resistor layer 42. The heating resistor layer 42 is fabricated via sintering at least one layer of resistance paste. A plurality of heating resistor layers 42 is arranged to be parallel to each other from top to bottom. Two adjacent heating resistor layers 42 are connected in series through an electric-conduction bridge 44. The heating resistor layer 42 on the upper region of the heat transfer component 3 and the heating resistor layer 42 on the lower region of the heat transfer component 3 are respectively electrically connected with the power-supply terminals 43.

At least one output water temperature sensor 6 is disposed at a region of the heat transfer component 3, which neighbors the water outlet 11. The output water temperature sensors 6 are arranged along the direction that the liquid flows from the water inlet 14 to the water outlet 11. The output water temperature sensors 6 are positioned between the water inlet 14 and the water outlet 11. Therefore, the liquid flowing into the sealed water passage 8 from the water inlet 14 will pass the detection areas of the output water temperature sensors 6 before it flows out of the water outlet 11.

The water inlet 14 and the water outlet 11 are respectively disposed at the regions near the bottom and the top of the heating body 10. Therefore, the output water temperature sensor 6 is near the top of the heating body 10.

The heat transfer component 3 further includes an over-temperature sensor 7.

Each of the output water temperature sensors 6 and the over-temperature sensor 7 is attached to the outer surface of thick-film heating circuit. The bottom insulation layers 41 of the thick-film heating circuit has data-receiving electrodes connected with the output water temperature sensors 6 and the over-temperature sensor 7.

The heating apparatus 100 for heating liquid further comprises an electric connector 20. The electric connector 20 includes a connector seat 5, heavy-electricity contacts 53 and light-electricity contacts 52. The connector seat 5 is disposed in the heating body 10. The heavy-electricity contacts 53 and the light-electricity contacts 52 are disposed in the connector seat 5 and respectively electrically contact the power-supply terminals 43 and the data-receiving electrodes on the heating body 10. The connector seat 5 further includes heavy-electricity leads 531 and light-electricity leads 521, which are respectively electrically connected with the heavy-electricity contacts 53 and the light-electricity contacts 52.

The heat transfer component 3 is fabricated with metallic laminates. The heat transfer component 3 has fixing braces 54 on the surface thereof. The connector seat 5 and the fixing braces 54 are fixedly connected with the heat transfer component 3. The fixing braces 54 are also electrically connected with a grounding lead 541.

The heat transfer component 3 is a circular-tube structure or a flat-tube structure. The thick-film heating circuit is in form of an opened ring and arranged around the outer surface of the heat transfer component 3. The power-supply terminals 43 and the data-receiving electrodes are respectively disposed at the head end and the tail end of the thick-film heating circuit. The connector seat 5 is in form of an arc and disposed outside the heating component 4. The heavy-electricity contacts 53 and the light-electricity contacts 52 are disposed at two ends of one side surface of the connector seat 5, which faces the heat transfer component 3.

Protection plates 51 are disposed on the upper regions of the connector seat 5, which are corresponding to the backsides of the heavy-electricity contacts 53 and the light-electricity contacts 52.

The bottom of the connector seat 5 has snap-fit hooks 55, which are to be snap-fitted to the lower edge of the heat transfer component 3.

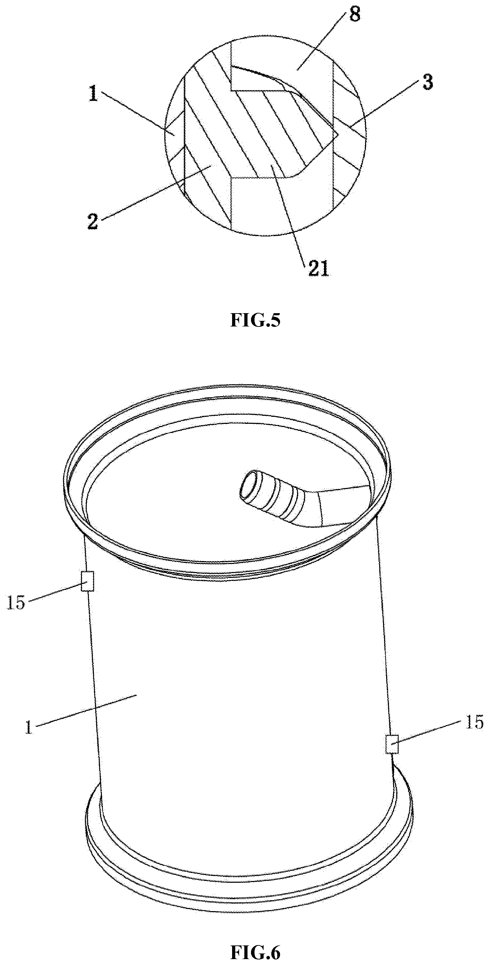

Refer to Fig.6 for a second embodiment of the present invention. The second embodiment is different from the first embodiment in that the surface of the sealed frame 1 has positioning elements 15 for positioning the sealed body 2. The positioning elements 15 are more than two bumps or protrudent ribs.

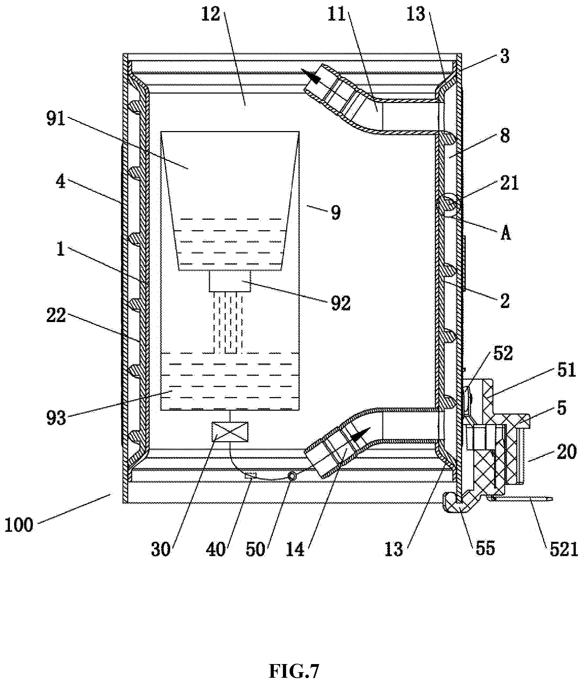

The present invention also discloses a water purification system using the abovementioned heating apparatus 100. Refer to Fig.7. The water purification system comprises a filtration unit 9, a flowrate regulating device 30 and a heating apparatus 100. The heating apparatus 100 has a water inlet 14 and a water outlet 11. The filtration unit 9, the flowrate regulating device 30 and the heating apparatus 100 are connected in series through water channels. The filtration unit 9 is disposed in the water channel before the water inlet 14.

The water purification system further comprises an input water temperature sensing device (input water temperature sensor 40). The filtration unit 9 includes an original water region 91, a water purification device 92 and a purified water region 93. The original water region 91 interconnects with the water inlet 14 of the heating apparatus 100 through the filtration device 92 and the purified water region 93.

The flowrate regulating device 30 is a water pump or a flowrate adjusting valve, disposed between the filtration unit 9 and the water inlet 14.

The input water temperature sensing device is disposed in the water channel before the water inlet 14. A unidirectional valve 50 is disposed between the input water temperature sensing device and the water inlet 14.

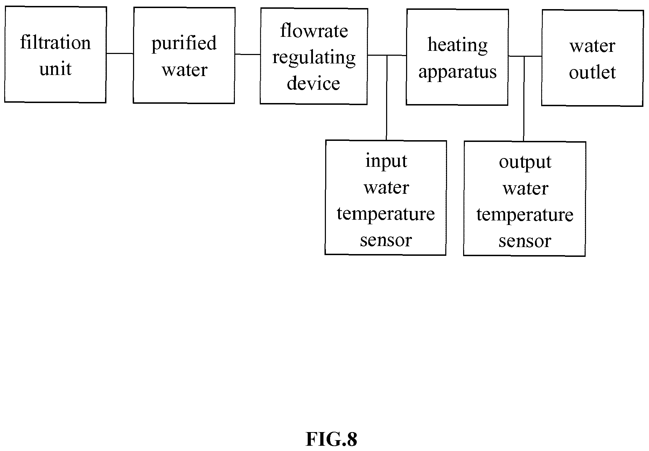

Refer to Fig.8 for the operational principle. After tap water enters the original water region (the user may pour tap water into the original water region manually), the tap water passes the filtration device via the outlet in the bottom of the original water region to the purified water region. The purified water passes the unidirectional valve and the flowrate regulating device to the heating apparatus 100, wherein the flowrate regulating device automatically adjusts the flowrate according to the current output water temperature, the current input water temperature, and the preset output water temperature. The purified water is heated in the heating apparatus 100 and then output from the water outlet. Thus, the user can enjoy the purified water whose temperature meets his/her requirement.

## Claims

1. A sealed body for a water passage heating apparatus, wherein the water passage heating apparatus comprises a heating body (10) and a sealed body (2); the heating body (10) includes a heat transfer component (3) and a heating component (4); the heat transfer component (3) is in form of a pipe structure; the heating component (4) is disposed on an outer surface of the heat transfer component (3); an inner surface of the heat transfer component (3) is a smooth surface;
**characterized in that** a sealing rib (21) rises spirally upward along a surface of the sealed body (2), and that the sealing rib (21) contacts the inner surface of the heat transfer component (3) in a sealed state, and that the sealing rib (21), the sealed body (2), and the inner surface of the heat transfer component (3) jointly enclose a room to form a sealed water passage (8) in a spiral form, and that a water outlet (14) and a water inlet (11) are respectively disposed at two ends of the sealed water passage (8), and that the sealed water passage (8) interconnects with exterior through the water outlet (14) and the water inlet (11).

2. The sealed body for a water passage heating apparatus according to claim 1, **characterized in that** a silicon material or a rubber material is molded on an outer surface of a sealed frame (1) in a two-shot injection molding technology to form the sealed body (2), and that the sealed frame (1) is connected with the heat transfer component (3), and that the sealed body (2) is enclosed by and tightly pressed against the heat transfer component (3) and the sealed frame (1).

3. The sealed body for a water passage heating apparatus according to claim 2, **characterized in that** the sealed frame (1) is in form of a pipe structure, having a hollow chamber (12), and that the hollow chamber (12) has two open ends, and that each of the water inlet (14) and the water outlet (11) extends toward interior of the hollow chamber (12).

4. The sealed body for a water passage heating apparatus according to claim 2 or claim 3, **characterized in that** the outer surface of the sealed frame (1) has positioning elements (15) for positioning the sealed body (2).

5. The sealed body for a water passage heating apparatus according to claim 4, **characterized in that** the positioning elements (15) are more than two bumps or protrudent ribs.

6. The sealed body for a water passage heating apparatus according to claim 2, **characterized in that** each of the sealed frame (1) and the heating body (10) is a metallic pipe structure, and that the sealed frame (1) has two everted edges (13) on two rims thereof, and that the everted edges (13) and two rims of the heat transfer component (3) are welded in a sealed way.

7. The sealed body for a water passage heating apparatus according to claim 1, **characterized in that** the sealing rib (21) and the sealed body (2) are fabricated into a one-piece component, and that the area where the sealing rib (21) contacts the sealed body (2) is larger than the area where the sealing rib (21) contacts the heating body (10) in a sealed state.

8. The sealed body for a water passage heating apparatus according to claim 7, **characterized in that** one edge of the sealing rib (21), which contacts the heat transfer component (3) in a sealed state, has a shape of a sharp angle.

9. The sealed body for a water passage heating apparatus according to claim 1, **characterized in that** the heating component (4) is a thick-film heating circuit, and that the thick-film heating circuit is sintered onto the outer surface of the heat transfer component (3).

10. The sealed body for a water passage heating apparatus according to claim 9, **characterized in that** a position of the thick-film heating circuit is between altitudes corresponding to the water inlet (14) and the water outlet (11), and that a surface area of the sealed water passage (8) is larger than a surface area of the thick-film heating circuit.
